# EUROPÄISCHE PATENTSCHRIFT

(11) **EP 1 553 071 B1**
(45) Veröffentlichungstag und Bekanntmachung des Hinweises auf die Patenterteilung: **08.08.2018**
(21) Anmeldenummer: 04030124.4
(22) Anmeldetag: 20.12.2004
(51) Int. Cl.: C06D 5/06, C06B 29/22, B60R 21/16, C06B 23/02

(54) **Verfahren zum Aufblasen eines Gassacks und Gassackmodul zur Verwendung in diesem Verfahren**
Method of inflating an airbag and airbag module for use in this method
Procédé de gonflage d'un sac gonflable et module de sac gonflable utilisé dans ce procédé

(30) Priorität: 12.01.2004 DE 102004001625
(43) Veröffentlichungstag der Anmeldung: 13.07.2005
(73) Patentinhaber: TRW Airbag Systems GmbH, 84544 Aschau am Inn (DE)
(72) Erfinder: Zeuner, Siegfried, Dr., 81369 München (DE); Reimann, Uwe, Dr., 90475 Nürnberg (DE); Schropp, Roland, Dr., 93105 Tegernheim (DE); Rödig, Karl-Heinz, 84559 Kraiburg (DE)
(74) Vertreter: ZF TRW Patentabteilung

(56) Entgegenhaltungen:
- EP-A1- 1 065 192
- EP-A2- 0 788 943
- EP-A2- 1 216 977
- WO-A1-96/13405
- WO-A2-98/06682
- WO-A2-98/47836
- JP-A- 5 016 752
- US-A- 4 556 236
- US-A- 5 685 562
- US-B1- 6 517 647

## Beschreibung

Die Erfindung betrifft ein Verfahren zum Aufblasen eines Gassacks einer Sicherheitseinrichtung in Fahrzeugen sowie ein Gassackmodul zur Verwendung in diesem Verfahren.

Sicherheitseinrichtungen für Fahrzeuge beinhalten üblicherweise ein Gassackmodul, welches einen aufblasbaren Gassack und einen an den Gassack angeschlossenen Gasgenerator umfaßt. Der Gasgenerator enthält üblicherweise einen pyrotechnischen Treibstoff, der infolge eines Fahrzeugunfalls aktiviert wird und innerhalb kürzester Zeit ein Gas oder Gasgemisch zum Aufblasen des Gassacks freisetzt.

Als pyrotechnischer Treibstoff wurden in der Vergangenheit insbesondere Gemische aus Natriumazid und anorganischen Nitraten verwendet. Aufgrund der hohen Toxizität dieser Gemische werden neuerdings jedoch Treibstoffe auf der Grundlage von organischen Brennstoffen und anorganischen Oxidationsmitteln eingesetzt. Diese azidfreien Treibstoffe zeichnen sich durch hohe Verbrennungstemperaturen aus, die das Entstehen von flüssigen oder gasförmigen Nebenprodukten begünstigen. Daher müssen diesen azidfreien Treibstoffen große Mengen an sogenannten Schlackenbildnern oder Kühlmitteln zugesetzt werden, die aber die Gasausbeute des Treibstoffs herabsetzen.

In der Kraftfahrzeugindustrie bestehen dagegen Anforderungen nach einer Miniaturisierung aller Systeme, einschließlich der Sicherheitseinrichtungen. Daher wäre die Verwendung von pyrotechnischen Treibstoffen mit Gasausbeuten von über 95 % vorteilhaft, damit die Baugröße und das Gewicht der Gasgeneratoren weiter reduziert werden kann.

Eine Möglichkeit zur Herstellung von pyrotechnischen Treibstoffen mit hoher Gasausbeute würde in der Verwendung von Ammoniumperchlorat als Oxidationsmittel bestehen. Beim Abbrand von ammoniumperchlorathaltigen Treibstoffen entsteht als Nebenprodukt jedoch Salzsäure, die aufgrund ihrer Toxizität und Korrosivität unerwünscht ist. Daher wird Ammoniumperchlorat als Oxidationsmittel in pyrotechnischen Treibstoffen für Fahrzeuginsassen-Rückhaltesysteme bisher nur in geringen Anteilen und/oder im Gemisch mit geeigneten Verbindungen, wie z.B. Alkalimetallnitraten, zur Neutralisation der beim Abbrand entstehenden Salzsäure im Treibstoff verwendet. Diese Mischungen weisen jedoch aufgrund der dann notwendigen Zuschlagsstoffe ebenfalls eine unzureichende Gasausbeute auf.

Die WO 98/47836 A2 offenbart gaserzeugende Zusammensetzungen aus einer Mischung aus Ammoniumperchlorat mit einem äquimolaren Anteil eines Chlorfängers sowie mindestens einer stöchiometrischen Menge eines organischen Treibstoffs zum vollständigen Abbrand. Vollständiger Abbrand im Sinne der WO 98/47836 A2 bedeutet, dass das gewählte Verhältnis von Gesamt-Sauerstoff zu organischem Brennstoff in dem Treibstoff ein Produktgemisch aus Kohlendioxid, Wasser und Metallchlorid sowie gegebenenfalls Metalloxid ergibt.

Aus der EP 1 216 977 sind Treibstoffzusammensetzungen bekannt, in denen Ammoniumperchlorat gemeinsam mit einem weiteren, als Chlorfänger bezeichneten Oxidationsmittel in einem Gemisch vorliegt. In den Ausführungsbeispielen liegt der Gehalt an zusätzlichen Oxidationsmitteln wie Natriumnitrat, basischem Kupfernitrat und Kupferoxid immer über 20 Gewichtsprozent. Außerdem ist in den Treibstoffzusammensetzungen ein Bindemittel oder ein Lösungsittel vorhanden, damit die Zusammensetzungen zu Extrudaten verarbeitet werden können.

Die EP 0 788 943 A2 zeigt Gassäcke mit einer Beschichtung zur Absorption oder Adsorption ungewünschter Stickstoffverbindungen, die aus der Umsetzung azidfreier Treibstoffzusammensetzungen entstehen und in kleinen Mengen in der Gasmischung vorliegen.

Die JP 5-016752 A beschreibt einen Airbag mit einer inneren Beschichtung, die ein Ammoniumsalz als Säurebildner in Form von Mikrokapseln enthält. Die Freisetzung des Salzes erfolgt bei Aktivierung des Airbags zur Neutralisierung stark alkalischer Substanzen, die bei der Zersetzung von Natriumazid entstehen.

Die WO 98/06682 A2 beschreibt azidfreie Treibstoffzusammensetzungen, die mit einem NH₂-Radikalbildner durchsetzt sind, der nach der Aktvierung des Treibstoffs mit Stickoxiden unter Bildung von Stickstoff reagieren soll.

Die EP 1065192 A1 offenbart die Verwendung von mit einem Gas beladenen Zeolith, wobei der Zeolith in nächster Nachbarschaft zur Treibstoffzusammensetzung angeordnet ist, um die Abbrandtemperatur zu reduzieren und toxische Nebenprodukte der Natriumazid-Treibstoffzusammensetzungen zu eliminieren. Bei den Nebenprodukten handelt es sich ausschließlich um Kohlenmonoxid und Stickoxide.

Aus der US-A-4 556 236 ist bekannt, im Gassack einen geschlossenen Behälter anzuordnen, der mit duftenden oder aromatischen Substanzen gefüllt ist, um unangenehme Gerüche des zum Aufblasen des Gassacks verwendeten Gases zu übertönen. Der Behälter kann beispielsweise ein aufreißbarer Kunststoffbeutel sein. Weder die Art der Substanzen noch die Zusammensetzung der aus dem Gasgenerator freigesetzten Gase ist jedoch näher beschrieben. Die beschriebene Anordnung eines zusätzlichen Behälters im Gassack führt darüber hinaus zu erhöhten Bauraumanforderurigen. Auch ist eine vollständige Verteilung der im Behälter angeordneten Substanzen während der kurzen Entfaltungsphase des Gassacks nicht gewährleistet.

Die WO-A 96/13405 betrifft ein Verfahren zur Verminderung der Toxizität von Gasen, die bei der Verbrennungsreaktion eines azidfreien Brennstoffs freigesetzt werden und die Stickoxide und Kohlenmonoxid enthalten. Zur Umwandlung der Stickoxide und des Kohlenmonoxids ist vorgesehen, die Innenwandung des Gassacks mit einer Doppelbeschichtung aus einer alkalischen Verbindung und einem Oxidationskatalysator zu beschichten. Die Beschichtung begünstigt somit nur die Einstellung des Gleichgewichts der in der Gasmischung vorliegenden Komponenten, die jedoch von weiteren äußeren Parametern wie Druck und Temperatur abhängig sein und aufgrund der kurzen zur Verfügung stehenden Reaktionszeit nur sehr unvollständig ablaufen wird.

Es besteht daher weiterhin Bedarf an Gassackmodulen mit Gasgeneratoren, die aufgrund der Verwendung von pyrotechnischen Treibstoffen mit hoher Gasausbeute sehr klein und durch den Verzicht auf aufwendige und teure Filtermaterialien auch leicht und kostengünstig herstellbar sind.

Zur Lösung dieser Aufgabe wird erfindungsgemäß ein Verfahren zum Aufblasen eines Gassacks einer Sicherheitseinrichtung in Fahrzeugen unter Verwendung eines Gasgenerators vorgeschlagen, der einen pyrotechnischen Treibstoff enthält, wobei der pyrotechnische Treibstoff aus einem organischen Brennstoff und Ammoniumperchlorat als Oxidationsmittel sowie, bezogen auf das Gewicht von Brennstoff und Ammoniumperchlorat, zwischen 0 und 5 Gew.-% üblichen Zusatzstoffen besteht und der pyrotechnische Treibstoff nach seiner Aktivierung ein Gas freisetzt, welches einen Anteil an Salzsäure enthält, wobei der Gassack eine an seiner Innenfläche angeordnete Beschichtung aufweist, und wobei das Gas dem Gassack zugeführt und die Salzsäure an der Beschichtung im Gassack neutralisiert oder absorbiert wird.

Die Verwendung von Ammoniumperchlorat als vorherrschendes oder sogar alleiniges Oxidationsmittel ermöglicht die Bereitstellung von gaserzeugenden Mischungen, die beim Abbrand praktisch vollständig in Gas umgewandelt werden. Hierdurch wird eine maximale Effizienz des Treibstoffs erreicht. Ammoniumperchlorat ist darüber hinaus mit nahezu allen organischen Brennstoffen kompatibel. Die Gasgeneratoren können aufgrund der Verwendung von pyrotechnischen Treibstoffen mit hoher Gasausbeute von über 95 % mit einer geringeren Menge an Treibstoff als herkömmliche Gasgeneratoren betrieben werden. Unter Gasausbeute wird hier die Masse des erzeugten Gases im Verhältnis zur Masse des eingesetzten Treibstoffs verstanden. Die Gasgeneratoren können somit kleiner und durch den Verzicht auf aufwendige und teure Filtermaterialien auch leichter und kostengünstiger hergestellt werden. Die aus der Reaktion des Ammoniumperchlorats mit dem Brennstoff entstehende Salzsäure wird sicher innerhalb des Gassacks neutralisiert. Somit gelangt kein toxisches oder korrosives Gas in den Fahrzeuginnenraum. Darüber hinaus erhöht sich durch die Wärmetönung der Neutralisationsreaktion auch die Standzeit des Gassacks.

Bevorzugt weist die Beschichtung einen Anteil an chemischen Substanzen auf, die unmittelbar mit der Salzsäure reagieren und diese in unschädliche feste Reaktionsprodukte überführen. Damit wird das bei der Verbrennungsreaktion entstehende Salzsäuregas sicher im Gassack zurückgehalten. Die chemischen Substanzen können beispielsweise aus der aus den Oxiden, Peroxiden, Hydroxiden, Carbonaten, Hydrogencarbonaten und Oxalaten von Alkalimetallen, Erdalkalimetallen und Übergangsmetallen sowie deren Mischungen bestehenden Gruppe ausgewählt werden. Diese Substanzen sind leicht verfügbar und kostengünstig. Darüber hinaus sind z.B. auch organische Amine oder polymere Verbindungen mit basischen funktionellen Gruppen verwendbar. Ganz besonders bevorzugt eignen sich polymere Verbindungen aus der Gruppe der Polyamine und lonenaustauscherharze. Alle diese Verbindungen sind auch im Gemisch miteinander einsetzbar.

Ferner können für die Beschichtung auch oberflächenaktive Substanzen verwendet werden, an denen das Salzsäuregas absorbiert werden kann. Als oberflächenaktive Substanzen eignen sich insbesondere synthetische Kieselsäure, Aluminiumoxid und -hydroxid, Titanoxid, Aktivkohle, Russ, Nanopulver und deren Mischungen, die eine hohe spezifische Oberfläche aufweisen. Die oberflächenaktiven Substanzen können sowohl im Gemisch miteinander als auch im Gemisch mit den vorgenannten chemischen Substanzen zur Neutralisation der Salzsäure verwendet werden.

Ein alternatives Verfahren gemäß der Erfindung sieht vor, einen Gasgenerator bereitzustellen, der einen pyrotechnischen Treibstoff mit einem organischen Brennstoff und Ammoniumperchlorat als Oxidationsmittel enthält, wobei der pyrotechnische Treibstoff nach seiner Aktivierung ein Gas freisetzt, welches einen Anteil an Salzsäure enthält, und wobei mit der Aktivierung des pyrotechnischen Treibstoffs oberflächenaktive Substanzen mit Absorptionsfähigkeit für Salzsäure oder chemische Substanzen freigesetzt und dem Gassack bevorzugt in feinst verteilter Form zugeführt werden, die im Gassack unmittelbar mit der Salzsäure reagieren und diese in unschädliche feste Reaktionsprodukte überführen. Als oberflächenaktive Substanzen oder chemische Substanzen können die vorgenannten Stoffe, auch im Gemisch miteinander, eingesetzt werden. Auf diese Weise bleibt die Effizienz des Treibstoffs im Sinne einer hohen Gasausbeute erhalten, während die Gefahr einer Schädigung des Gassackgewebes durch heiße Partikel nahezu ausgeschlossen ist.

Gegenstand der Erfindung ist ferner ein Gassackmodul zur Verwendung in dem oben beschriebenen Verfahren, welches einen Gassack und einen an den Gassack angeschlossenen Gasgenerator umfaßt. Der Gasgenerator enthält einen pyrotechnischen Treibstoff, der im wesentlichen aus einem organischen Brennstoff und Ammoniumperchlorat als Oxidationsmittel besteht, wobei bis zu 5 Gew.-%, bezogen auf das Gewicht von Brennstoff und Ammoniumperchlorat, übliche Zusatzstoffe für pyrotechnische Treibstoffe vorhanden sein können. Vorzugsweise besteht der Treibstoff ausschließlich aus Brennstoff und Ammoniumperchlorat, wodurch die Bereitstellung von pyrotechnischen Treibstoffen mit bis zu 100 %-iger Gasausbeute möglich ist. Der Gassack weist eine Beschichtung zur Neutralisation oder Absorption der aus dem pyrotechnischen Treibstoff freigesetzten Salzsäure auf.

Als organische Brennstoffe eignen sich Verbindungen der allgemeinen Summenformel CₓH_{y}NᵥO_{w} mit x ≥ 1, y ≥ 1 sowie v ≥ 0 und w ≥ 0. Die Verwendbarkeit von organischen Verbindungen ist nahezu universell. Ausgeschlossen sind lediglich Verbindungen mit für den Anwendungszweck in Kraftfahrzeugen unerwünschten Eigenschaften, wie beispielsweise hoher Toxizität, Kanzerogenität, Mutagenität oder sonstiger unakzeptabler umweltbezogener Eigenschaften, wie z.B. einer hohen Gefährdung für Gewässer oder Erdreich. Darüber hinaus sind Verbindungen unerwünscht, die eine zu geringe chemische oder thermische Stabilität bzw. eine geringe Lagerstabilität in Testversuchen bei 110°C über 400 Stunden aufweisen. Ferner sind solche Verbindungen auszuschließen, die eine sichere Verarbeitung bei der Herstellung der pyrotechnischen Treibstoffe nicht zulassen, wie empfindliche hochexplosive Substanzen oder Mischungen.

Geeignet sind insbesondere auch Brennstoffe auf der Grundlage von polymeren Substanzen, wie beispielsweise Epoxidharzen, die bei der Herstellung extrudierter Treibstoffe besondere Vorteile bieten. Bevorzugt sind weiterhin organische Brennstoffe, die bereits einen möglichst hohen Sauerstoffanteil im Molekül aufweisen, da hierdurch der benötigte Anteil an Ammoniumperchlorat und damit der zu neutralisierende Anteil an Salzsäure vermindert werden kann.

Als organische Brennstoffe werden beispielsweise stickstoffreiche Tetrazol-, Triazol- oder Guanidin-Verbindungen sowie deren Mischungen eingesetzt. Beispiele für diese Verbindungen sind 5-Aminotetrazol, 1H-Tetrazol, Bistetrazol, Azotetrazol, Triazolon, Nitrotriazolon, Guanidincarbonat, Guanidinnitrat, Guanidinperchlorat, Aminoguanidinnitrat, Diaminoguanidinnitrat, Triaminoguanidinnitrat, Nitroguanidin sowie deren Salze, Derivate oder deren Mischungen.

Der organische Brennstoff kann ferner aus der aus stickstoffhaltigen heterocyclischen organischen Säuren sowie deren Mischungen bestehenden Gruppe ausgewählt sein. Beispiele für diese stickstoffhaltigen heterocyclischen organischen Säuren sind Cyanursäure, Isocyanursäure, Cyamelid, Urazol, Uracil, Uramin, Urazin, Alloxan, Alloxansäure, Alloxantin, Xanthin, Allantoin, Barbitursäure, Orotsäure, Dilitursäure, Triazolon, Violursäure, Succinimid, Dialursäure, Isodialursäure, Hydantoin, Pseudohydantoin, Imidazolon, Pyrazolon, Parabansäure, Furazan, Ammelin, Kreatinin, Maleinsäurehydrazid, Harnsäure, Pseudoharnsäure, Guanazin, Guanazol, Melamin, deren Salze, Derivate oder deren Mischungen.

Ferner kann als organischer Brennstoff eine stickstofffreie organische Säure verwendet werden. Bevorzugt sind in diesem Zusammenhang Fumarsäure, Maleinsäure, Malonsäure, Weinsäure, Tartronsäure, Citronensäure, Ascorbinsäure, deren Salze oder Derivate, oder Mischungen der stickstofffreien organischen Säuren.

Schließlich kann als organischer Brennstoff eine Polymerverbindung verwendet werden, die beispielsweise aus der aus den Polyalkylverbindungen, Polyalkylenverbindungen, Polyamiden, Polyimiden, Polyestern, Polyethern, Polyacetaten, Polyacrylverbindungen und Polyglykolen sowie deren -OH, -CN, -COOH, -NH₂,-N₃, -ONO₂ oder -NO₂-Gruppen enthaltenden Derivaten und Copolymerisaten bestehenden Gruppe ausgewählt sein kann.

Die üblichen Zusatzstoffe sind insbesondere aus der Gruppe der Abbrandmoderatoren, Kühlmittel und Zündhilfen ausgewählt. Auch der Zusatz eines geringen Anteils weiterer Oxidationsmittel zur Verbesserung der Abbrandtemperatur oder der Abbrandgeschwindigkeit kann vorteilhaft sein. Beispiele für die üblichen Zusatzstoffe sind insbesondere Alkali- und Erdalkalimetallnitrate, Perchlorate und Peroxide, Übergangsmetalloxide wie Kupferoxid oder Eisenoxid, basische Metallnitrate wie basisches Kupfernitrat oder Ruß, Graphit, Siliciumdioxid, Aluminiumoxid oder Molybdänsulfid. Schließlich kann der Treibstoff noch die üblicherweise verwendeten Verarbeitungshilfen, wie z.B. Rieselhilfen, Preßhilfen und/oder Gleitmittel, enthalten.

Diese üblichen Zusatzstoffe werden in einem Anteil von höchstens 5 Gew.-%, bezogen auf das Gesamtgewicht von Brennstoff und Ammoniumperchlorat, eingesetzt, bevorzugt höchstens 3 Gewichtsprozent. Höhere Anteile führen zu einer unerwünscht niedrigen Gasausbeute des Treibstoffs.

Bei Abbrandversuchen mit ammoniumperchlorathaltigen Treibstoffen wurde überraschenderweise gefunden, daß selbst bei der Verwendung eines Überschusses an Ammoniumperchlorat und damit hohen Anteilen von Salzsäure im Treibgas eine meßtechnische Erfassung des Salzsäuregases nicht möglich war. Eine mögliche Erklärung hierfür liegt in der hohen Löslichkeit von Salzsäuregas in Wasser, so daß angenommen werden kann, daß sich unmittelbar nach dem Abbrand des Treibstoffs aus dem erzeugten Salzsäuregas und gleichfalls entstehendem Wasserdampf Salzsäureaerosole bilden, die beim Abkühlen an der Innenwandung des Gassacks kondensieren und so der Gasphase entzogen werden. Durch die Anordnung einer die Salzsäure neutralisierenden oder absorbierenden Beschichtung kann dieser Kondensationsprozeß noch wesentlich beschleunigt werden. Die Menge der Beschichtung wird vorzugsweise so gewählt, daß die gesamte bei der Verbrennungsreaktion aus dem Treibstoff entstehende Salzsäure neutralisiert wird. Die Emission von schädlichem Salzsäuregas in den Fahrzeuginnenraum ist damit sicher zu verhindern.

Aufgrund dieser Beobachtungen ist auch anzunehmen, daß die Neutralisation der Salzsäure im Gassack besonders wirksam abläuft, wenn der verwendete Brennstoff ausreichende Anteile an Wasserstoffresten aufweist, die bei der Verbrennungsreaktion mit Ammoniumperchlorat zu Wasser oxidiert werden. Vorteilhafterweise sollte der Anteil an Wasserstoffresten im Brennstoff mindestens so hoch sein, daß für jedes gebildete Molekül Salzsäure wenigstens ein Molekül Wasser erzeugt wird.

Das erfindungsgemäße Verfahren und das erfindungsgemäße Gassackmodul ermöglichen die Bereitstellung von kleineren und leichteren Gasgeneratoren, die mit pyrotechnischen Treibstoffen unter Verwendung von Ammoniumperchlorat als Oxidationsmittel betrieben werden können. Gleichzeitig ist bei diesen Gasgeneratoren jedoch sichergestellt, daß keine schädlichen Salzsäuregase aus dem Gassackmodul in den Fahrzeuginnenraum gelangen.

## Patentansprüche

1. Verfahren zum Aufblasen eines Gassacks einer Sicherheitseinrichtung in Fahrzeugen unter Verwendung eines Gasgenerators, der einen pyrotechnischen Treibstoff enthält, wobei der pyrotechnische Treibstoff aus einem oder mehreren organischen Brennstoffen und Ammoniumperchlorat als Oxidationsmittel sowie, bezogen auf das Gewicht des Brennstoffs und Ammoniumperchlorat, zwischen 0 und 5 Gew.-% üblichen Zusatzstoffen besteht und nach seiner Aktivierung ein Gas freisetzt, welches einen Anteil an Salzsäure enthält, wobei der Gassack eine an seiner Innenfläche angeordnete Beschichtung aufweist, und wobei das Gas dem Gassack zugeführt und die Salzsäure an der Beschichtung im Gassack neutralisiert oder absorbiert wird.

2. Verfahren nach Anspruch 1, **dadurch gekennzeichnet, dass** die Beschichtung einen Anteil an chemischen Substanzen enthält, die unmittelbar mit der Salzsäure reagieren und diese in unschädliche feste Reaktionsprodukte überführen.

3. Verfahren nach Anspruch 1 oder 2, **dadurch gekennzeichnet, dass** die chemischen Substanzen aus der aus den Oxiden, Peroxiden, Hydroxiden, Carbonaten, Hydrogencarbonaten und Oxalaten von Alkalimetallen, Erdalkalimetallen und Übergangsmetallen sowie deren Mischungen bestehenden Gruppe ausgewählt werden.

4. Verfahren nach Anspruch 1 oder 2, **dadurch gekennzeichnet, dass** die chemischen Substanzen aus der aus organischen Aminen und polymeren Verbindungen mit basischen funktionellen Gruppen bestehenden Gruppe ausgewählt werden.

5. Verfahren nach Anspruch 4, **dadurch gekennzeichnet, dass** die polymeren Verbindungen aus der Gruppe der Polyamine und lonenaustauscherharze ausgewählt werden.

6. Verfahren nach einem der Ansprüche 1 bis 5, **dadurch gekennzeichnet, dass** für die Beschichtung oberflächenaktive Substanzen mit Absorptionsfähigkeit für Salzsäure verwendet werden.

7. Verfahren nach Anspruch 6, **dadurch gekennzeichnet, dass** die oberflächenaktiven Substanzen aus der aus synthetischer Kieselsäure, Aluminiumoxid und -hydroxid, Titandioxid, Aktivkohle, Ruß, Nanopulver und deren Mischungen bestehenden Gruppe ausgewählt werden.

8. Verfahren zum Aufblasen eines Gassacks einer Sicherheitseinrichtung in Fahrzeugen unter Verwendung eines Gasgenerators, der einen pyrotechnischen Treibstoff enthält, wobei der pyrotechnische Treibstoff aus einem oder mehreren organischen Brennstoffen und Ammoniumperchlorat als Oxidationsmittel sowie, bezogen auf das Gewicht von Brennstoff und Ammoniumperchlorat, zwischen 0 und 5 Gew.-% üblichen Zusatzstoffen besteht, wobei der pyrotechnische Treibstoff nach seiner Aktivierung ein Gas freisetzt, welches einen Anteil an Salzsäure enthält, und wobei mit der Aktivierung des pyrotechnischen Treibstoffs chemische Substanzen freigesetzt und dem Gassack zugeführt werden, die im Gassack unmittelbar mit der Salzsäure reagieren und diese in unschädliche feste Reaktionsprodukte überführen.

9. Gassackmodul zur Verwendung in einem Verfahren gemäß einem der vorhergehenden Ansprüche, mit einem Gassack und einem an den Gassack angeschlossenen Gasgenerator, wobei der Gasgenerator einen pyrotechnischen Treibstoff enthält, der aus einem oder mehreren organischen Brennstoffen und Ammoniumperchlorat als Oxidationsmittel sowie, bezogen auf das Gewicht von Brennstoff und Ammoniumperchlorat, zwischen 0 und 5 Gew.-% üblichen Zusatzstoffen besteht, und wobei der Gassack eine Beschichtung zur Neutralisation oder Absorption der aus dem pyrotechnischen Treibstoff freigesetzten Salzsäure aufweist.

10. Gassackmodul nach Anspruch 10, **dadurch gekennzeichnet, dass** der pyrotechnische Treibstoff aus dem organischen Brennstoff und Ammoniumperchlorat besteht.

11. Gassackmodul nach Anspruch 9 oder 10, **dadurch gekennzeichnet, dass** der pyrotechnische Treibstoff eine massenbezogene Gasausbeute von über 95 % aufweist.

12. Gassackmodul nach einem der Ansprüche 9 bis 11, **dadurch gekennzeichnet, dass** die Beschichtung einen Anteil an chemischen Substanzen enthält, die unmittelbar mit der Salzsäure reagieren und diese in unschädliche feste Reaktionsprodukte überführen.

13. Gassackmodul nach Anspruch 12, **dadurch gekennzeichnet, dass** die chemischen Substanzen aus der aus den Oxiden, Peroxiden, Hydroxiden, Carbonaten, Hydrogencarbonaten und Oxalaten von Alkalimetallen, Erdalkalimetallen und Übergangsmetallen sowie deren Mischungen bestehenden Gruppe ausgewählt sind.

14. Gassackmodul nach Anspruch 12, **dadurch gekennzeichnet, dass** die chemischen Substanzen aus der aus organischen Aminen und polymeren Verbindungen mit basischen funktionellen Gruppen bestehenden Gruppe ausgewählt sind.

15. Gassackmodul nach Anspruch 14, **dadurch gekennzeichnet, dass** die polymeren Verbindungen aus der Gruppe der Polyamine und lonenaustauscherharze ausgewählt sind.

16. Gassackmodul nach einem der Ansprüche 9 bis 15, **dadurch gekennzeichnet, dass** die Beschichtung oberflächenaktive Substanzen mit Absorptionsfähigkeit für Salzsäure enthält.

17. Gassackmodul nach Anspruch 16, **dadurch gekennzeichnet, dass** die oberflächenaktiven Substanzen aus der aus synthetischer Kieselsäure, Aluminiumoxid und -hydroxid, Titandioxid, Aktivkohle, Ruß, Nanopulver und deren Mischungen bestehenden Gruppe ausgewählt sind.

## Claims

1. A method of inflating a gas bag of a safety arrangement in vehicles using a gas generator which contains a pyrotechnic propellant, the pyrotechnic propellant consisting of one or more organic fuels and ammonium perchlorate as oxidizing agent and, based on the weight of the fuel and ammonium perchlorate, between 0 and 5 % by weight of conventional additives and, upon its activation, releasing a gas which contains a proportion of hydrochloric acid, the gas bag having a coating arranged on its inner surface, and the gas being supplied to the gas bag and the hydrochloric acid being neutralized or absorbed on the coating in the gas bag.

2. The method according to claim 1, **characterized in that** the coating contains a proportion of chemical substances which are reacted immediately with the hydrochloric acid to convert it into harmless solid reaction products.

3. The method according to claim 1 or 2, **characterized in that** the chemical substances are selected from the group consisting of the oxides, peroxides, hydroxides, carbonates, hydrogen carbonates and oxalates of alkali metals, alkaline earth metals and transition metals and mixtures thereof.

4. The method according to claim 1 or 2, **characterized in that** the chemical substances are selected from the group consisting of organic amines and polymeric compounds with basic functional groups.

5. The method according to claim 4, **characterized in that** the polymeric compounds are selected from the group of polyamines and ion exchanger resins.

6. The method according to any of claims 1 to 5, **characterized in that** surface-active substances capable of absorbing hydrochloric acid are used for the coating.

7. The method according to claim 6, **characterized in that** the surface-active substances are selected from the group consisting of synthetic silicic acid, aluminium oxide and aluminium hydroxide, titanium dioxide, activated carbon, soot, nanopowder and mixtures thereof.

8. A method of inflating a gas bag of a safety arrangement in vehicles using a gas generator which contains a pyrotechnic propellant, the pyrotechnic propellant consisting of one or more organic fuels and ammonium perchlorate as oxidizing agent and, based on the weight of the fuel and the ammonium perchlorate, between 0 and 5 % by weight of conventional additives, the pyrotechnic propellant, upon its activation, releasing a gas which contains a proportion of hydrochloric acid, and, concurrently with the activation of the pyrotechnic propellant, chemical substances being released and supplied to the gas bag which are reacted in the gas bag immediately with the hydrochloric acid to convert it into harmless solid reaction products.

9. A gas bag module for use in a method according to any of the preceding claims, comprising a gas bag and a gas generator connected to the gas bag, the gas generator containing a pyrotechnic propellant which consists of one or more organic fuels and ammonium perchlorate as oxidizing agent and, based on the weight of the fuel and the ammonium perchlorate, between 0 and 5 % by weight of conventional additives, and the gas bag having a coating for the neutralization or absorption of the hydrochloric acid released from the pyrotechnic propellant.

10. The gas bag module according to claim 10, **characterized in that** the pyrotechnic propellant consists of the organic fuel and ammonium perchlorate.

11. The gas bag module according to claim 9 or 10, **characterized in that** the pyrotechnic propellant has a gas yield, related to mass, of over 95 %.

12. The gas bag module according to any of claims 9 to 11, **characterized in that** the coating contains a proportion of chemical substances which are reacted immediately with the hydrochloric acid to convert it into harmless solid reaction products.

13. The gas bag module according to claim 12, **characterized in that** the chemical substances are selected from the group consisting of the oxides, peroxides, hydroxides, carbonates, hydrogen carbonates and oxalates of alkali metals, alkaline earth metals and transition metals and mixtures thereof.

14. The gas bag module according to claim 12, **characterized in that** the chemical substances are selected from the group consisting of organic amines and polymeric compounds with basic functional groups.

15. The gas bag module according to claim 14, **characterized in that** the polymeric compounds are selected from the group of polyamines and ion exchanger resins.

16. The gas bag module according to any of claims 9 to 15, **characterized in that** the coating contains surface-active substances capable of absorbing hydrochloric acid.

17. The gas bag module according to claim 16, **characterized in that** the surface-active substances are selected from the group consisting of synthetic silicic acid, aluminium oxide and aluminium hydroxide, titanium dioxide, activated carbon, soot, nanopowder and mixtures thereof.

## Revendications

1. Procédé de gonflage d'un coussin à gaz d'un moyen de sécurité dans des véhicules en utilisant un générateur de gaz qui contient un agent propulseur pyrotechnique, l'agent propulseur pyrotechnique étant composé d'un ou de plusieurs combustibles organiques et de perchlorate d'ammonium en tant qu'agent d'oxydation et de 0 à 5 % en poids d'additifs classiques par rapport au poids du combustible et du perchlorate d'ammonium, et dégageant après son activation un gaz qui contient une part d'acide chlorhydrique, le coussin à gaz présentant un revêtement ménagé sur sa face intérieure, et le gaz étant amené vers le coussin à gaz, et l'acide chlorhydrique étant neutralisé ou absorbé au niveau du revêtement dans le coussin à gaz.

2. Procédé selon la revendication 1, **caractérisé en ce que** le revêtement contient une part de substances chimiques qui réagissent immédiatement avec l'acide chlorhydrique et le transforme en produits réactionnels solides inoffensifs.

3. Procédé selon la revendication 1 ou 2, **caractérisé en ce que** les substances chimiques sont choisies dans le groupe constitué d'oxydes, de peroxydes, d'hydroxydes, de carbonates, d'hydrogénocarbonates et d'oxalates de métaux alcalins, de métaux alcalinoterreux et de métaux transitoires, et de leurs mélanges.

4. Procédé selon la revendication 1 ou 2, **caractérisé en ce que** les substances chimiques sont choisies dans le groupe constitué d'amines organiques et de composés polymères avec des groupes fonctionnels basiques.

5. Procédé selon la revendication 4, **caractérisé en ce que** les composés polymères sont choisis dans le groupe des polyamines et des résines échangeuses d'ions.

6. Procédé selon l'une des revendications 1 à 5, **caractérisé en ce que** des substances tensioactives à capacité d'absorption pour l'acide chlorhydrique sont utilisées pour le revêtement.

7. Procédé selon la revendication 6, **caractérisé en ce que** les substances tensioactives sont choisies dans le groupe constitué d'acide silique synthétique, d'oxyde et d'hydroxyde d'aluminium, d'oxyde de titane, de charbon actif, de suie, de nanopoudre et de leurs mélanges.

8. Procédé de gonflage d'un coussin à gaz d'un moyen de sécurité dans des véhicules en utilisant un générateur de gaz qui contient un agent propulseur pyrotechnique, l'agent propulseur pyrotechnique étant composé d'un ou de plusieurs combustibles organiques et de perchlorate d'ammonium en tant qu'agent d'oxydation et de 0 à 5 % en poids d'additifs classiques par rapport au poids du combustible et du perchlorate d'ammonium, l'agent propulseur pyrotechnique dégageant après son activation un gaz qui contient une part d'acide chlorhydrique, et des substances chimiques étant dégagées et amenées vers le coussin à gaz lors de l'activation de l'agent propulseur pyrotechnique, lesquelles réagissent immédiatement avec l'acide chlorhydrique dans le coussin à gaz et le transforme en produits réactionnels solides inoffensifs.

9. Module de coussin à gaz pour l'utilisation dans un procédé selon l'une des revendications précédentes, comportant un coussin à gaz et un générateur de gaz raccordé au coussin à gaz, le générateur de gaz contenant un agent propulseur pyrotechnique composé d'un ou de plusieurs combustibles organiques et de perchlorate d'ammonium en tant qu'agent d'oxydation et de 0 à 5 % en poids d'additifs classiques par rapport au poids du combustible et du perchlorate d'ammonium, et le coussin à gaz présentant un revêtement pour la neutralisation ou l'absorption de l'acide chlorhydrique dégagé de l'agent propulseur pyrotechnique.

10. Module de coussin à gaz selon la revendication 10, **caractérisé en ce que** l'agent propulseur pyrotechnique est composé d'un combustible organique et de perchlorate d'ammonium.

11. Module de coussin à gaz selon la revendication 9 ou 10, **caractérisé en ce que** l'agent propulseur pyrotechnique présente un rendement en gaz par rapport à la masse de plus de 95 %.

12. Module de coussin à gaz selon l'une des revendications 9 à 11, **caractérisé en ce que** le revêtement contient une part de substances chimiques qui réagissent immédiatement avec l'acide chlorhydrique et le transforme en produits réactionnels solides inoffensifs.

13. Module de coussin à gaz selon la revendication 12, **caractérisé en ce que** les substances chimiques sont choisies dans le groupe constitué d'oxydes, de peroxydes, d'hydroxydes, de carbonates, d'hydrogénocarbonates et d'oxalates de métaux alcalins, de métaux alcalinoterreux et de métaux transitoires, et de leurs mélanges.

14. Module de coussin à gaz selon la revendication 12, **caractérisé en ce que** les substances chimiques sont choisies dans le groupe constitué d'amines organiques et de composés polymères avec des groupes fonctionnels basiques.

15. Module de coussin à gaz selon la revendication 14, **caractérisé en ce que** les composés polymères sont choisis dans le groupe des polyamines et des résines échangeuses d'ions.

16. Module de coussin à gaz selon l'une des revendications 9 à 15, **caractérisé en ce que** le revêtement contient des substances tensioactives à capacité d'absorption pour l'acide chlorhydrique.

17. Module de coussin à gaz selon la revendication 16, **caractérisé en ce que** les substances tensioactives sont choisies dans le groupe constitué d'acide silique synthétique, d'oxyde et d'hydroxyde d'aluminium, d'oxyde de titane, de charbon actif, de suie, de nanopoudre et de leurs mélanges.
